# EUROPEAN PATENT APPLICATION

(11) **EP 0 793 039 A1**
(43) Date of publication of application: **03.09.1997**
(21) Application number: 97200549.0
(22) Date of filing: 26.02.1997
(51) Int. Cl.: F16H 61/00

(54) **Device for regulating a continuously variable transmission in motor vehicles**

(30) Priority: 27.02.1996 BE 9600164
(71) Applicant: VCST, naamloze vennootschap, B-3800 Sint-Truiden (BE)
(72) Inventor: Reniers, Dirk Louis, B 3600 Genk (BE)
(74) Representative: Donné, Eddy

(57) **Abstract**

Device for regulating a continuously variable transmission which consists of a primary pulley (3) placed on an ingoing shaft (2); a secondary pulley (6) placed on an outgoing shaft (5); a transmission element (8) provided between the pulleys (3-6) whose transmission ratio can be altered by moving pulley halves (4-7) of the above-mentioned pulleys (3-6); a pressure regulating valve (17) with a slidable valve disk (23) to regulate the pinch force exerted on the transmission element (8); and means to adjust the pinch force as a function of the engine torque, characterized in that these means are at least composed of pressure means (34) which can exert a force on the above-mentioned valve disk (23); on/off switches (35) to switch the pressure means (34) in a first or second position, whereby a smaller stop force is exerted on the above-mentioned valve disk (23) in the second position than in the first position; a coupling (36) provided between at least one of the axially slidable pulley halves (4) and the valve disk (23) which exerts a stop force on the valve disk (23) which diminishes as the transmission ratio decreases; and control means (37) which control the switches (35) as a function of the engine torque.

## Description

The present invention concerns a device for regulating a continuously variable transmission in motor vehicles.

In particular, it concerns transmissions of the type which consists of a primary pulley placed on an ingoing shaft with a pulley half which can be axially moved; a secondary pulley placed on an outgoing shaft with a pulley half which can be axially moved; an endless transmission element provided between the pulleys whose transmission ratio can be altered by axially moving the pulley halves of the above-mentioned pulleys; and a hydraulic control to move the mobile pulley halves by means of one or several pressure cylinders, such that the required transmission ratio is obtained.

In a conventional, hydraulically controlled, continuously variable transmission, for example as described in US 5.230.663, it is known to regulate the pinch force, which must prevent the transmission element from slipping, as a function of the transmission ratio. This regulation is carried out by means of a pressure regulating valve which is connected to one of the axially movable pulley halves of the transmission via a feeler mechanism. This pressure regulating valve hereby provides for what is called a line pressure which is supplied to the pressure cylinder cooperating with the pulley half concerned. In a conventional manner, the secondary pressure regulating valve is used thereto, in other words the valve which controls the secondary pulley. Conventionally, the feeler mechanism is connected to the movable pulley half of the primary pulley.

The above-mentioned line pressure is usually set such that sufficient pinch force is available at the maximum torque of the engine of the motor vehicle. In situations where the engine torque is not maximal, there will be an excess of line pressure and pinch force. This excess leads to a loss of efficiency and thus also to extra consumption.

In order to restrict this loss, it is known to reduce the line pressure and thus the pinch force when the engine torque drops under a certain value, and to increase it again when the engine torque exceeds a certain value. To this end, several possibilities have already been elaborated, which still show a number of disadvantages however.

Thus, a transmission was developed for example at Van Doorne's Transmissies whereby the line pressure in the case of a partial throttle situation is reduced via what is called a throttle pressure, set by means of a cam which is controlled by the accelerator. However, the obtained pressure drop in this solution is independent of the transmission ratio, which has for a result that the efficiency improvement is maximal in the smallest transmission ratio, i.e. in overdrive, but that it is restricted in the largest transmission ratio, i.e. in what is called the low position.

Fuji developed a transmission whereby the line pressure is lowered with partial throttle via an electronically controlled on/off valve. Hereby also, the pressure drop is independent of the transmission ratio and, consequently, the efficiency improvement in the neighbourhood of the largest transmission ratio is also very restricted.

The disadvantages of these known embodiments can be remedied by making the extra drop of the line pressure with partial throttle or with a low torque dependent of the transmission ratio, such that the extra pressure drop with high transmission ratios, and consequently the consumptive profit, is maximal. Basically, this could be realized by controlling the continuously variable transmission in an entirely electronic manner. However, such a full electronic control is very expensive.

Also, the invention aims to remedy one or several of the above-mentioned problems without a full electronic control being required.

To this aim, the invention consists of a device for regulating a continuously variable transmission in motor vehicles, in particular a transmission of the type which consists of a primary pulley placed on an ingoing shaft with a pulley half which can be axially moved; a secondary pulley placed on an outgoing shaft with a pulley half which can be axially moved; an endless transmission element provided between the pulleys whose transmission ratio can be altered by axially moving the pulley halves of the above-mentioned pulleys; a pressure regulating valve with slidable valve disk to regulate the pinch force exerted on the transmission element via a pressure cylinder working in conjunction with one of the above-mentioned pulleys; and means to adjust the pinch force as a function of the engine torque, characterized in that these means are at least composed of pressure means which can exert a force on the valve disk of the pressure regulating valve; on/off switches to switch the pressure means in a first or second position, whereby the pressure means exert a smaller stop force on the above-mentioned valve disk in the second position than in the first position; a coupling provided between at least one of the axially slidable pulley halves and the valve disk which exerts a stop force on the valve disk which progressively diminishes as the transmission ratio of the transmission decreases; and control means which control the switches, such that the pressure means are put in the first position with high torques and in the second position with low torques.

The above-mentioned coupling preferably consists of a feeler mechanism which is preferably connected to the axially movable pulley half of the primary pulley on the one hand, and which continuously acts on the above-mentioned valve disk by means of a spring on the other hand.

According to a first practical possibility, the above-mentioned pressure means consist of elastic means, such as a spring which is either or not tightened by means of the above-mentioned on/off switches.

According to a preferred embodiment, the above-mentioned coupling and the pressure means cooperate such that the stop force which is supplied by the pressure means when they are in the above-mentioned first position, progressively diminishes as the transmission ratio of the transmission decreases.

According to a preferred embodiment, the pressure means to this end consist of a spring which is either or not set on the feeler mechanism by means of the on/off switches.

According to a second practical embodiment, the above-mentioned pressure means consist of a chamber working in conjunction with the valve disk of the pressure regulating valve, whereby the on/off switches make it possible to create varying pressures in the chamber, preferably by supplying pressure on the one hand and by providing a blow-off connection on the other hand.

In order to better explain the characteristics of the invention, the following preferred embodiments are described as an example only without being limitative in any way, with reference to the accompanying drawings, in which:
figure 1 shows a diagram in which the line pressure of a continuously variable transmission is represented as a function of the engine speed for different situations;
figure 2 schematically represents a device according to the invention;
figures 3 to 5 represent the device of figure 2 in three other positions;
figure 6 represents a practical embodiment;
figure 7 schematically represents a variant of the device according to the invention, for a position which coincides with that of figure 5.

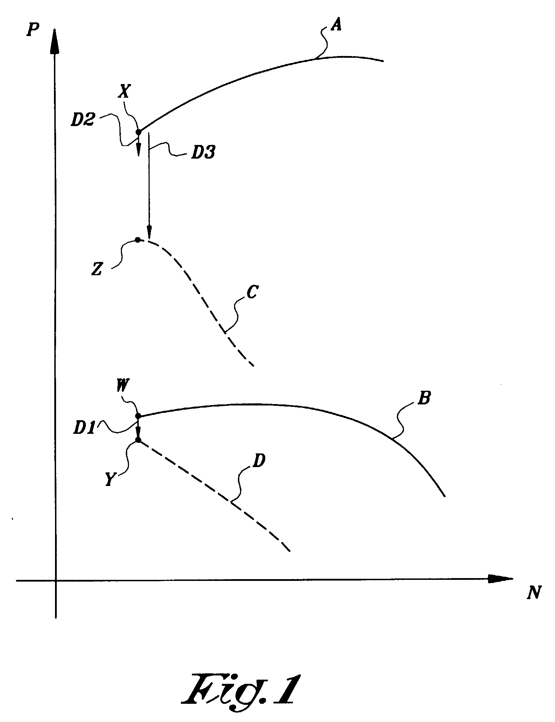

As represented in the diagram of figure 1, the required line pressure P for a continuously variable transmission as a function of the engine speed N represents a fluctuation which is characterized by the curves A and B for full throttle, i.e. the largest transmission ratio, and the smallest transmission ratio respectively.

It is known to change the line pressure as a function of the transmission ratio, whereby the line pressure is selected such, however, that it is sufficiently large in each "full throttle" situation to supply the required pinch force to the transmission element.

In partial throttle situations, i.e. whereby the engine torque is not maximal, curves such as for example the curves C and D are created for the largest transmission ratio and the smallest transmission ratio. These curves show that the line pressure in a partial throttle situation can possibly be lowered.

According to the solution of Fuji mentioned in the introduction, this is done by reducing the line pressure over a certain value D1 as soon as the engine torque drops under a preset value. Naturally, said reduction D1 is hereby selected such that the obtained line pressure is never lower than the required line pressure, not even in the most critical situation, namely with the smallest transmission ratio (overdrive).

As the same reduction D1 is applied in less critical situations, the efficiency improvement remains limited however. In the least critical situation, a reduction D2 of the line pressure, which is equal to the above-mentioned reduction D1, will represent a very restricted improvement as compared to the improvement made when a maximal reduction D3 is carried out.

According to the present invention, this is remedied in an efficient manner without a full electronic control being required.

For clarity's sake, the construction of a continuously variable transmission, to which the invention applies, is illustrated by means of figure 2.

Such a continuously variable transmission 1 hereby mainly consists of a primary pulley 3 placed on an ingoing shaft 2 with a pulley half 4 which can be axially moved; a secondary pulley 6 placed on an outgoing shaft 5 with a pulley half 7 which can be axially moved; and an endless transmission element 8, such as a belt, provided between the pulleys 3 and 6, such that the transmission ratio between the shafts 2 and 5 can be altered by axially moving the pulley halves 4 and 7.

The ingoing shaft 2 is usually driven via a drive-off coupling 9 and a reversing unit 10 by the motor 11 of the motor vehicle concerned. The revolving movement of the outgoing shaft 5 is transferred via a differential 12 or such on a number of wheels 13 of the vehicle.

The pulley halves 4 and 7 are moved by means of hydraulic pressure cylinders working in conjunction therewith, a primary pressure cylinder 14 and a secondary pressure cylinder 15 respectively, whose pressures are regulated by means of a primary regulating valve 16 and a secondary pressure regulating valve 17.

In the example shown, the secondary pressure regulating valve 17 provides for what is called the line pressure or secondary pressure, in other words the pressure which makes sure that the pinch force exerted on the transmission element 8 is sufficiently large, so that the latter does not slip over the pulleys 3-6.

The secondary pressure prevailing in the pipe 18, 19 and 20 is regulated by the lifting pressure, supplied by pumping up hydraulic medium by means of a pump 21 from a reservoir 22 and by blowing it off in the secondary pressure regulating valve 17. To this end, a slidable valve disk 23 is provided in the pressure regulating valve 17 which, thanks to its movement, can make more or less hydraulic medium flow out of the pipe 19 via a blow-off opening 24.

The position of the valve disk 23 is hereby determined by the balance between a force exerted on the valve disk 23 by means of at least one spring 25 on the one hand, and the instantaneous line pressure in a chamber 26 and a steering pressure in a chamber 27 on the other hand. The steering pressure is hereby set for example by means of a Pitot-tube 28 and a Pitot-chamber 29.

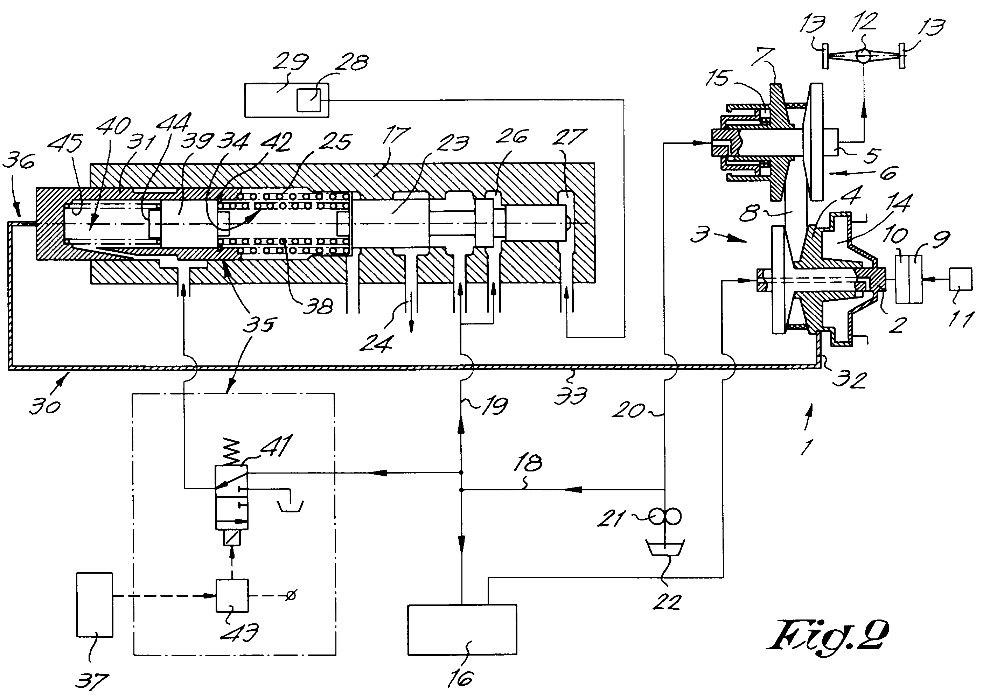

The regulation of the line pressure as a function of the transmission ratio is carried out by means of a feeler mechanism 30 which follows the movement of one of the above-mentioned axially movable pulley halves 4-7. As can be seen in figure 3, this feeler mechanism 30 normally consists of a feeler plunger 31 upon which the above-mentioned spring 25 is set, a feeler 32 which is connected to the axially movable pulley half 4 of the primary pulley 3 and a coupling 33 which converts the movement of the feeler 32 in the movement of the feeler plunger 31.

According to the present invention, the transmission is equipped with a device for the regulation thereof, provided with means to adjust the pinch force as a function of the engine torque. In the embodiment of figure 2, these means mainly consist of pressure means 34, in particular elastic means, which can exert a force on the valve disk 23 of the pressure regulating valve 17; on/off switches 35 to switch the pressure means 34 in a first or second position, whereby the pressure means 34 are less tightened in the second position than in the first position; a coupling 36 provided between at least one of the axially movable pulley halves, in this case the pulley half 4, and the above-mentioned pressure means 34, which progressively reduces the tension in the pressure means 34 when these have been brought in the above-mentioned first position as the transmission ratio of the transmission 1 diminishes; and control means 37 which control the on/off switches 35, such that the pressure means 34 are put in the first position with high torques and in the second position with low torques.

In the embodiment represented in figure 2, the coupling 36 is mainly formed of the above-mentioned feeler mechanism 30. The above-mentioned pressure means 34 hereby consist of an extra spring 38 which is either or not set on the feeler mechanism 30 by means of the above-mentioned switches 35 as a function of the steering. In a practical embodiment, this extra spring 38 is provided concentrically in the spring 25.

The on/off switches 35 consist of a modulation plunger 39, preferably working in conjunction with the feeler plunger 31, upon which the above-mentioned extra spring 38 is set on the one hand, and of drive means to excite the modulation plunger 39 on the other hand.

The modulation plunger 39 can slide in a cylinder room 40 provided in the feeler plunger 31.

As is represented, the above-mentioned drive means preferably consist of a hydraulic excitation, whereby hydraulic medium is allowed in the cylinder room 40 behind the modulation plunger 39 via an admission valve 40 which is controlled by means of the above-mentioned control means 37. These drive means are made such that, during the hydraulic excitation, the modulation plunger 39 is always pressed against a stop 42 situated in the feeler plunger 31.

The control means 37 consist for example of an electronic circuit and make sure that the admission valve 41 is controlled in an appropriate manner as a function of the engine torque.

In the embodiment represented, the admission valve 41 consists of an electrically controlled, spring-loaded valve which allows for the supply of hydraulic medium to the cylinder room 40 in the electrically non-excited condition and which provides for a blow-off connection in the electrically excited condition, such that the cylinder room 40 becomes pressureless. The supply valve 41 can be operated by means of an electric relay 43 controlled via the control means 37.

The pressure means 34, in particular the spring 38, are preferably selected such that they are dead or almost dead in the non-excited condition of the modulation plunger 39. In order to prevent the modulation plunger 39 from coming loose, it can be loaded at its end 44 by means of a feeble spring 45.

The working of the above-mentioned device can be derived from the figures 2 to 5.

When the admission valve 41 is not excited, hydraulic medium is supplied to the cylinder room 40 and the modulation plunger 39 is pressed against the stop 42. In this condition, which is represented in the figures 2 and 3 for "overdrive" and "low" respectively, both springs 25 and 38 are pushed in as a function of the position of the feeler 32. In this situation, the difference in line pressure between "overdrive" and "low" is determined by the sum of the spring constants of the two above-mentioned springs. By making this sum equal to the spring constant of the traditionally used single spring, the line pressure can be regulated in this situation in the same manner as in the case of the conventional embodiment with a single spring.

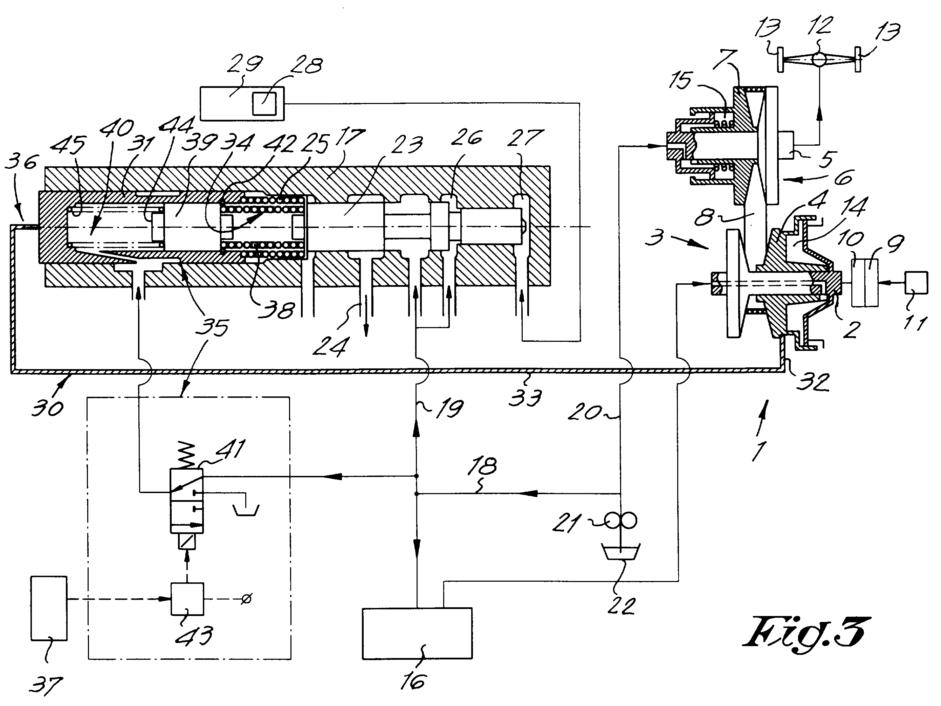

As soon as the engine torque has dropped below a specific value, the admission valve 41 is excited via the relay 43, so that conditions are obtained for "overdrive" and "low" as described in figures 4 and 5. The cylinder room 40 hereby becomes pressureless, and the pressure means 34, i.e. the spring 38, exert no or practically no more pressure on the valve disk 23. In this situation, only the outer spring 25 still exerts a force on the valve disk 23. By selecting the free length and the spring constant of this spring 25, the line pressure can be set in the low-torque condition in "overdrive" and "low".

Since only one spring is used, a lower line pressure is obtained.

Since the pressure in the spring 38 changes together with the transmission ratio when tightened, the obtained pressure drop will also depend on the transmission ratio when the spring 38 is released, which has for a result that the line pressure reduction is optimized. This optimisation is also shown in figure 1, in which the operating conditions reached in the situations according to figures 2-3-4-5 may in theory coincide with the points W-X-Y-Z.

The moment at which the reversing takes place can be chosen by the designer.

When the electronic or electric part falls out, the admission valve 41 will always occupy the position as represented in figures 2 and 3, so that the safest position is automatically selected.

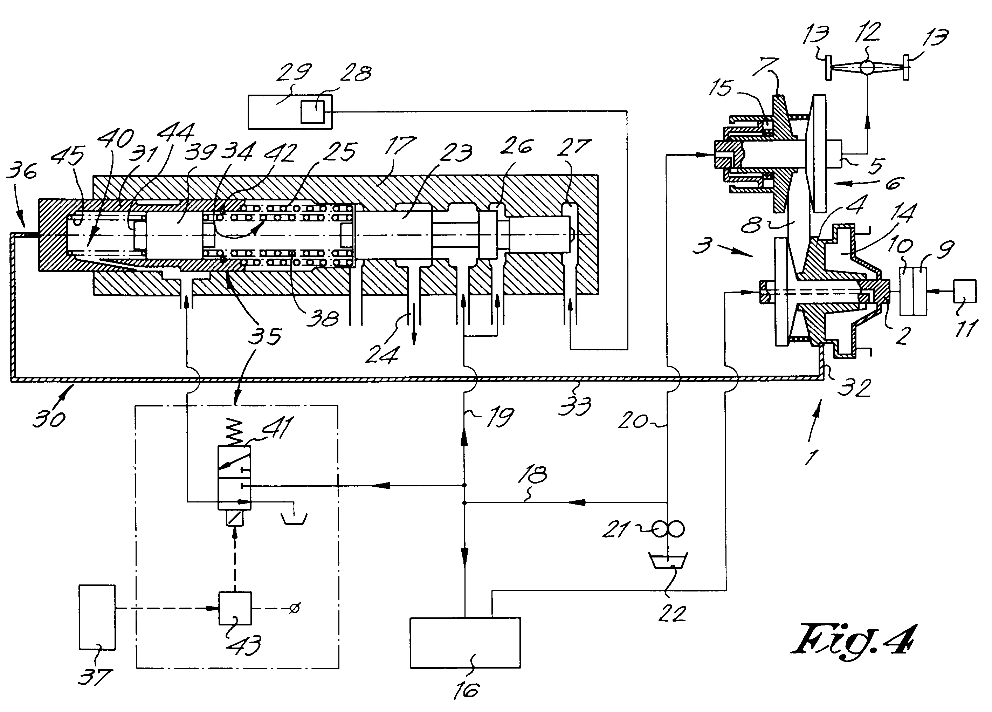

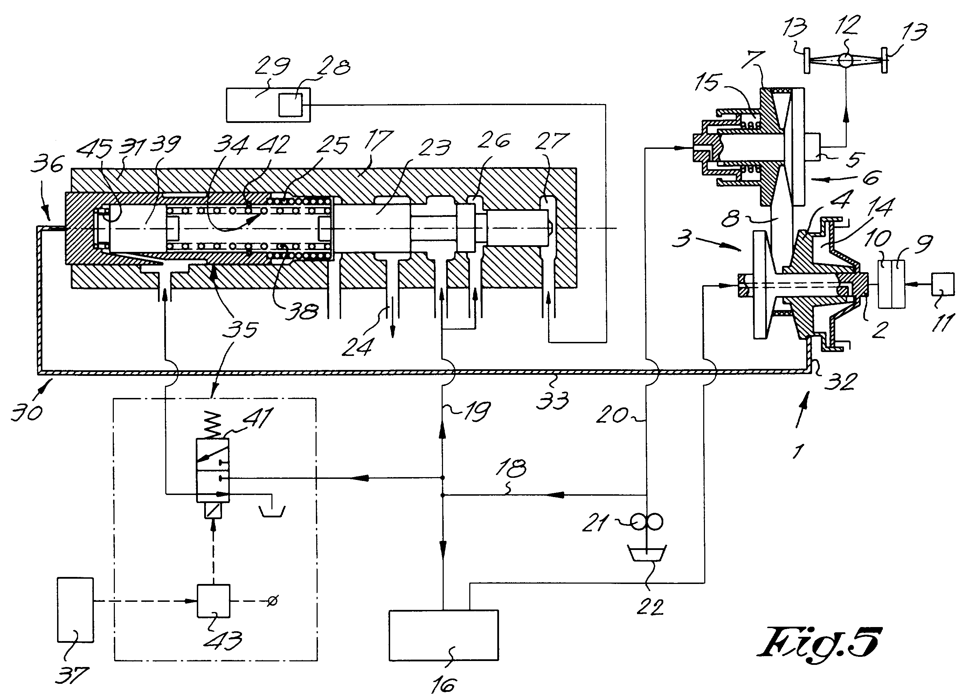

In addition, figure 6 shows how the whole of figures 2 to 5 can be integrated in a practical embodiment.

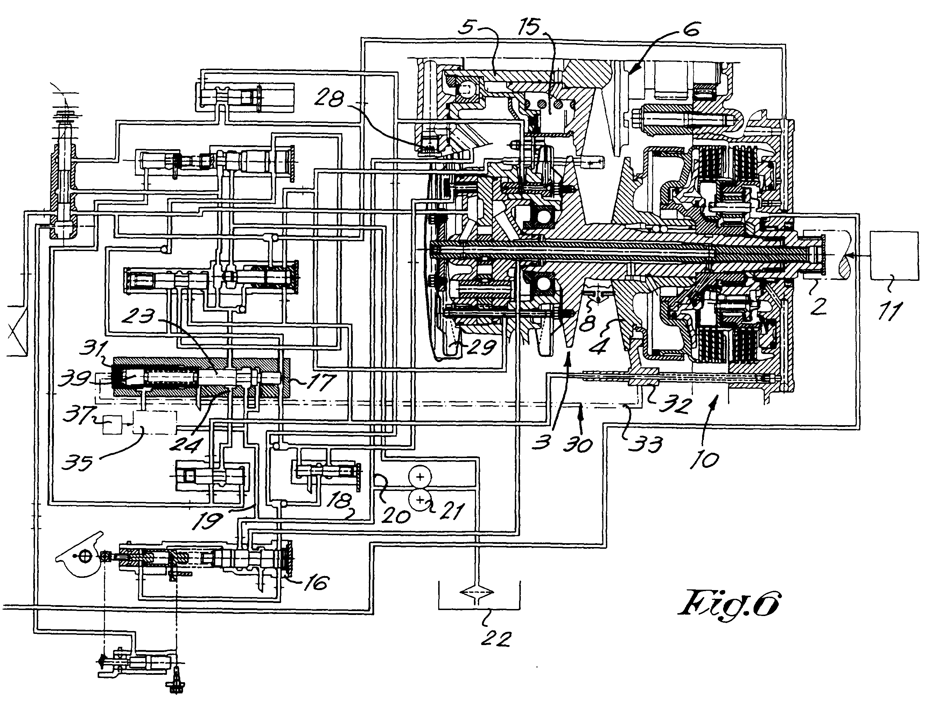

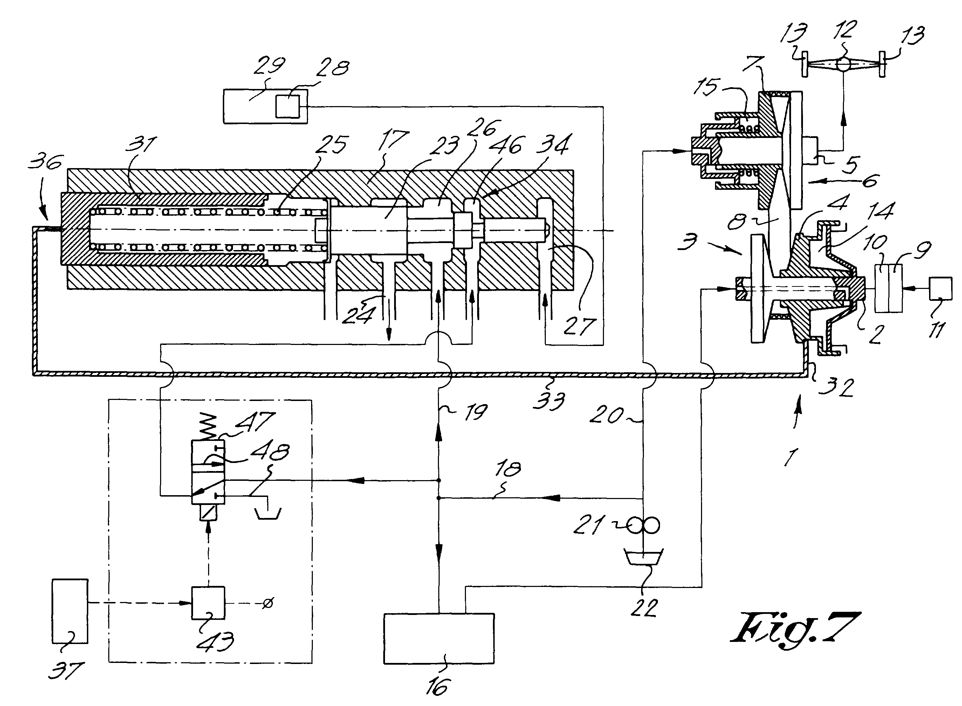

Figure 7 shows a variant in which the pressure means 34 consist of a chamber 46 which works in conjunction with the valve disk 23 of the pressure regulating valve 17, whereby the on/off switches 35 make it possible to exert different pressures in the chamber 46. Thus, the modulation plunger 39 and the extra spring 38 can be omitted.

The above-mentioned chamber 46 is hereby provided opposite the feeler mechanism 30, so that a pressure in this chamber 46 supplies a force on the valve disk 23 which counteracts the force supplied by the feeler mechanism 30; and the on/off switches 35 mainly consist of a spring-loaded valve 47 which allows for the supply of hydraulic medium under pressure to the above-mentioned chamber 46 when excited, whereas it provides for a blow-off connection 48 from this chamber 46 when it is not excited.

The working of the device of figure 7 is mainly analogous to that of figures 2 to 5. The basic difference consists in that, with high torques, in other words whose values exceed a certain preset value, the valve 47 is not excited, so that the room 46 becomes pressureless, and in that with low torques, in other words torques whose values do not exceed a certain preset value, it is excited, so that the secondary pressure is provided to the chamber 46. Putting the chamber 46 under pressure hereby has the same effect as making the cylinder room 40 pressureless in the embodiment of figures 2 to 5, and vice versa.

The present invention is by no means limited to the embodiment described by way of example and represented in the accompanying drawings; on the contrary, such a device for regulating a continuously variable transmission can be made in all shapes and dimensions while still remaining within the scope of the invention.

For example, it is not excluded to realize the coupling 36 in another manner than with a feeler mechanism, or to provide a separate feeler mechanism to this end; to connect the coupling 36 to the movable pulley half 7 of the secondary pulley 6; to realize the above-mentioned regulation by means of the primary regulating valve; to excite the modulation plunger 39 electrically instead of hydraulically; or to make the pressure means 34 act on another place on the valve disk 23, for example indirectly onto it.

## Claims

1. Device for regulating a continuously variable transmission in motor vehicles, in particular a transmission (1) of the type which consists of a primary pulley (3) placed on an ingoing shaft (2) with a pulley half (4) which can be axially moved; a secondary pulley (6) placed on an outgoing shaft (5) with a pulley half (7) which can be axially moved; an endless transmission element (8) provided between the pulleys (3-6) whose transmission ratio can be altered by axially moving the pulley halves (4-7) of the above-mentioned pulleys (3-6) ; a pressure regulating valve (17) with slidable valve disk (23) to regulate the pinch force exerted on the transmission element (8) via a pressure cylinder (14) working in conjunction with one of the above-mentioned pulleys (6); and means to adjust the pinch force as a function of the engine torque, characterized in that these means are at least composed of pressure means (34) which can exert a force on the valve disk (23) of the pressure regulating valve (17); on/off switches (35) to switch the pressure means (34) in a first or second position, whereby the pressure means (34) exert a smaller stop force on the above-mentioned valve disk (23) in the second position than in the first position; a coupling (36) provided between at least one of the axially slidable pulley halves (4) and the valve disk (23) which exerts a stop force on the valve disk (23) which progressively diminishes as the transmission ratio of the transmission (1) decreases; and control means (37) which control the switches (35), such that the pressure means (34) are put in the first position with high torques and in the second position with low torques.

2. Device according to claim 1, characterized in that the coupling (36) consists of a feeler mechanism (30).

3. Device according to claim 2, characterized in that the feeler mechanism (30) is connected to the movable pulley half (4) of the primary pulley (3).

4. Device according to claim 2 or 3, characterized in that for the feeler mechanism use is made of a feeler mechanism (30) which continuously acts on the above-mentioned valve disk (23) by means of a spring (25).

5. Device according to any of the preceding claims, characterized in that the above-mentioned pressure means (34) consist of elastic means, such as a spring (38), which is either or not tightened by means of the above-mentioned on/off switches (35).

6. Device according to any of the preceding claims, characterized in that the above-mentioned coupling (36) and the pressure means (34) cooperate, such that the stop force which is supplied by the pressure means (34) when they are in the above-mentioned first position, progressively diminishes as the transmission ratio of the transmission decreases.

7. Device according to claims 5 and 6, characterized in that the pressure means (34) to this end consist of a spring which is either or not set on the feeler mechanism (30) by means of the on/off switches (35).

8. Device according to claim 7, characterized in that the above-mentioned on/off switches (35) consist of a modulation plunger (39) upon which the spring (34) is set on the one hand, and of drive means to either or not excite the modulation plunger (39) on the other hand.

9. Device according to claims 4 and 8, characterized in that the feeler mechanism (30) is provided with a feeler plunger (31), upon which the continuously acting spring (25) is set; and in that the modulation plunger (39) can slide in the feeler plunger (31).

10. Device according to claim 9, characterized in that the modulation plunger (39) is pressed against a stop (42) situated on the feeler plunger (31) when the drive means are excited.

11. Device according to claim 8, 9 or 10, characterized in that the drive means consist of a hydraulic excitation, whereby hydraulic medium is allowed behind the modulation plunger (39) via an admission valve (41) which is controlled by means of the above-mentioned control means (37).

12. Device according to claim 11, characterized in that the admission valve (41) is a spring-loaded valve which allows for the supply of hydraulic medium to the back side of the modulation plunger (39) in its non-excited condition, and which provides for a blow-off connection when excited.

13. Device according to any of claims 8 to 12, characterized in that the spring (38) functioning as a pressure means (34) is dead or almost dead in the non-excited condition of the modulation plunger (39).

14. Device according to claim 4 and any of claims 5 to 13, characterized in that the above-mentioned springs (25-38) are situated concentrically in one another.

15. Device according to any of claims 8 to 14, characterized in that the modulation plunger (39) is provided at its end (44) opposite the end upon which the extra spring (38) is set, is loaded by means of a feeble spring (45) which prevents the modulation plunger (39) from coming loose.

16. Device according to any of claims 1 to 4, characterized in that the pressure means consist of a chamber (46) working in conjunction with the valve disk (23) of the pressure regulating valve (17), and in that the on/off switches (35) make it possible to create varying pressures in the chamber.

17. Device according to any of claims 2 to 4 and claim 16, characterized in that the above-mentioned chamber (46) is situated opposite the feeler mechanism (30), such that a pressure in this chamber (46) supplies a force to the valve disk (23) which counteracts the force supplied by the feeler mechanism (30); and in that the on/off switches (35) mainly consist of a spring-loaded valve (47) which allows for the supply of hydraulic medium under pressure to the above-mentioned chamber (46) when excited, whereas it provides for a blow-off connection (48) from this chamber (46) when not excited.

18. Device according to any of the preceding claims, characterized in that the above-mentioned pressure regulating valve is formed of the secondary pressure regulating valve (17), in other words the pressure regulating valve which works in conjunction with the secondary pulley (6); and in that the above-mentioned coupling (36), in particular the above-mentioned feeler mechanism (30), is coupled to the axially movable pulley half (4) of the primary pulley (3).
